(19) Europäisches Patentamt
European Patent Office
Office européen des brevets

(11) EP 1 849 598 A1

(12) EUROPEAN PATENT APPLICATION
published in accordance with Art. 158(3) EPC

(43) Date of publication:
31.10.2007 Bulletin 2007/44

(51) Int Cl.:
B32B 27/32 (2006.01) B65D 65/40 (2006.01)
B65D 77/28 (2006.01)

(21) Application number: 06714235.6

(22) Date of filing: 15.02.2006

(86) International application number:
PCT/JP2006/303095

(87) International publication number:
WO 2006/088216 (24.08.2006 Gazette 2006/34)

(84) Designated Contracting States:
DE FR GB

(30) Priority: 15.02.2005 JP 2005037161
15.09.2005 JP 2005268794

(71) Applicants:
• Nippon Paper-Pak Co. Ltd.
Tokyo 162-0826 (JP)
• Sun Tox Co., Ltd.
Tokyo 105-0003 (JP)
• TOKUYAMA CORPORATION
Shunan-shi, Yamaguchi 745-0053 (JP)

(72) Inventors:
• SASE, Kazuhiko
, Kita-ku, Tokyo, 1140002 (JP)

• MIYAGAWA, Shigekazu
, Kita-ku, Tokyo, 1140002 (JP)
• ASOI, Eiichi
, Kita-ku, Tokyo, 1140002 (JP)
• OODERA, Toshiya
e, Minato-ku, Tokyo, 1050003 (JP)
• KURAMOTO, Naohiko
e, Minato-ku, Tokyo, 1050003 (JP)
• UEKI, Hajime
e, Minato-ku, Tokyo, 1050003 (JP)

(74) Representative: Müller-Boré & Partner
Patentanwälte
Grafinger Strasse 2
81671 München (DE)

(54) MULTILAYER POLYOLEFIN FILM FOR USE IN PAPER CONTAINER FOR LIQUIDS, MATERIAL FOR USE IN PAPER CONTAINER FOR LIQUIDS COMPRISING THE SAME, AND PAPER CONTAINER FOR LIQUIDS USING THE SAME

(57) The present invention provides a multilayer polyolefin film having a specific layered configuration that does not change the flavor or taste of contents when used as a sealant layer for the innermost surfaces of a liquid-storing paper container, and also a liquid-storing paper container material and a liquid-storing paper container that use this film. The invention has the following characteristic configuration: A multilayer polyolefin film for a liquid-storing paper container composed at least of one surface layer (a layer), another surface layer (c layer), and a middle layer (b layer); a multilayer polyolefin film for a liquid-storing paper container wherein the a layer, the b layer, and the c layer have the characteristics described below; and a liquid-storing paper container material and liquid-storing paper container that use this film.
a layer: a layer composed of one or a mixture of the following: a propylene homopolymer, a propylene-based copolymer, and a ethylene-$\alpha$-olefin copolymer
b layer: a layer composed of a propylene-based copolymer and an ethylene-$\alpha$-olefin copolymer

c layer: a layer composed of an ethylene-$\alpha$-olefin copolymer, having a melting point of 60 to 140°C and a thickness of 1 to 20 $\mu$m

FIG 2

EP 1 849 598 A1

**Description**

Technical Field

The present invention relates to a liquid-storing paper container material and a liquid-storing paper container that do not change the flavor or taste of the contents.

Background Art

Gable-top containers, flat-top containers, brick containers, and various other types of containers have been known in the past as liquid-storing paper containers for milk, juice, and other beverages. These liquid-storing paper containers are formed using liquid-storing paper container materials in which a thermoplastic synthetic resin is laminated as a sealant layer over the outermost layers on both sides of a paper substrate, and this molding must of necessity include a step for heat-sealing one outermost layer (e.g., the sealant layer farthest inward when the liquid-storing paper container is molded) of the liquid-storing paper container material to the other outermost layer (the sealant layer farthest outward during molding). In such cases, polyethylene has been used as the thermoplastic synthetic resin constituting the sealant layers, due to its cost and heat-sealing properties.

However, when polyethylene is used as the resin constituting the sealant layer on the innermost surfaces of the liquid-storing paper container, low-molecular-weight components contained therein move into the contents in the liquid-storing paper container, and the contents are likely to take on the smell or taste of the resin or abnormal smells or tastes. Particularly, in cases in which the liquid-storing paper container material is heated using a heater or an automatic vending machine equipped with a heating function, the resin smell that gradually arises severely reduces the commercial value of the contents in the liquid-storing paper container. The polyethylene also adsorbs the taste components in cases in which the liquid-storing paper container contains fruit juice or the like. Therefore, the flavor or taste of the contents may be changed during the storage of a liquid-storing paper container in which polyethylene is used as the resin constituting the innermost surface sealant layer.

In an attempt to resolve these problems, proposals have been made for liquid-storing paper-container materials that use an ethylene-$\alpha$-olefin copolymer (Japanese Laid-open Patent Application No. 2001-199433), polyester (Japanese Laid-open Patent Application No. 11-216821), or the like instead of polyethylene as the thermoplastic synthetic resin constituting the sealant layer of the innermost surfaces of the liquid-storing paper container, but these have yet to yield sufficient performance.

Disclosure of Invention

In view of these problems with conventional techniques, an object of the present invention is to provide a liquid-storing paper container material and a liquid-storing paper container wherein there is little change in the flavor or taste in the contents, and excellent heat-sealing strength is obtained.

As a result of earnest research aimed at resolving the problems described above, the inventors have completed the present invention upon discovering that these problems can be resolved by molding a liquid-storing paper container from a liquid-storing paper container material that uses a specific multilayer polyolefin film.

Specifically, the liquid-storing paper container material of the present invention is a liquid-storing paper container material obtained by laminating at least a sealant B layer composed of a thermoplastic synthetic resin as one outermost layer, a paper layer, and a sealant A layer composed of a multilayer polyolefin film as another outermost layer; wherein the sealant A layer is composed at least of one surface layer (a layer), another surface layer (c layer), and a middle layer (b layer), which are all described below; and the *a* layer is laminated on the inner side while the *c* layer is laminated on the outer side.

   *a* layer: a layer composed of one or a mixture of the following: a propylene homopolymer, a propylene-based copolymer, and a ethylene-$\alpha$-olefin copolymer
   *b* layer: a layer composed of a propylene-based copolymer and an ethylene-$\alpha$-olefin copolymer
   *c* layer: a layer composed of an ethylene-$\alpha$-olefin copolymer, having a melting point of 60 to 140˚C and a thickness of 1 to 20 $\mu$m.

This liquid-storing paper container material is preferable as a forming material for a liquid-storing paper container.

The multilayer polyolefin film for a liquid-storing paper container may be a film wherein the propylene-based copolymer constituting the *a* layer is a propylene-ethylene-1-butene terpolymer or a propylene-ethylene random copolymer. Furthermore, the multilayer polyolefin film for a liquid-storing paper container may be a film wherein the ethylene-

$\alpha$-olefin copolymer constituting the *a* layer is an ethylene-1-butene copolymer or an ethylene-1-hexene copolymer.

Furthermore, the multilayer polyolefin film for a liquid-storing paper container may be a film wherein the propylene-based copolymer constituting the *b* layer is a propylene-ethylene random copolymer, and the multilayer polyolefin film for a liquid-storing paper container may also be a film wherein the ethylene-$\alpha$-olefin copolymer constituting the same *b* layer is an ethylene-1-butene copolymer.

Additionally, the multilayer polyolefin film for a liquid-storing paper container may be a film wherein the ethylene-$\alpha$-olefin copolymer constituting the *c* layer is an ethylene-1-butene copolymer.

Brief Description of Drawings

FIG. 1 is a perspective view of a brick-shaped liquid-storing paper container of the present invention;

FIG. 2 is a layer structure diagram of the liquid-storing paper container material having a straw insertion hole of Embodiment 1;

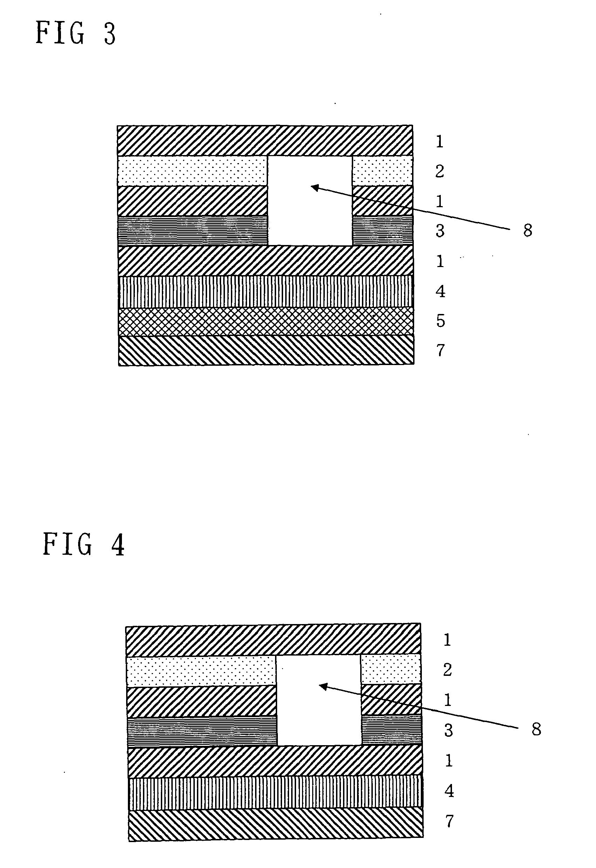

FIG. 3 is a layer structure diagram of the liquid-storing paper container material having a straw insertion hole of Comparative Example 1;

FIG. 4 is a layer structure diagram of the liquid-storing paper container material having a straw insertion hole of Comparative Example 2;

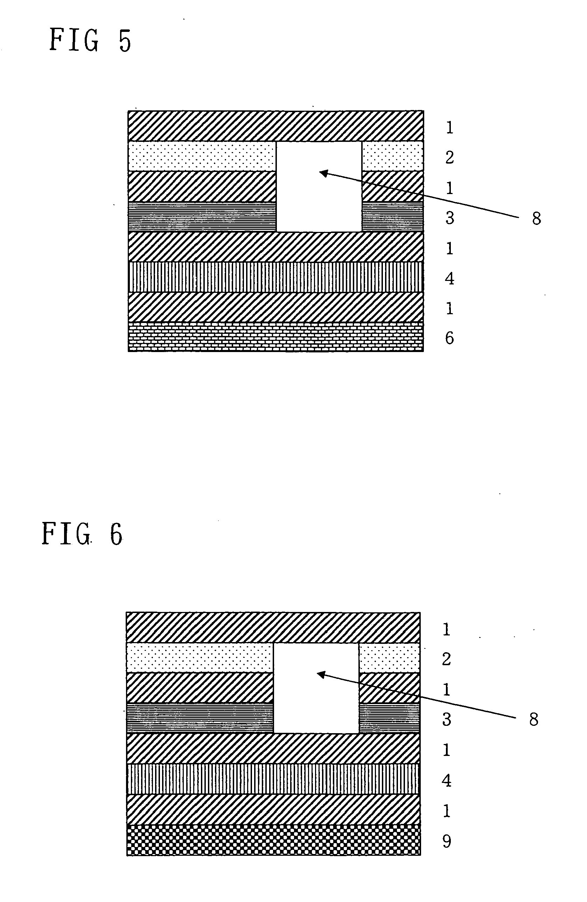

FIG. 5 is a layer structure diagram of a liquid-storing paper container material having a straw insertion hole of Embodiments 2 through 4; and

FIG. 6 is a layer structure diagram of the liquid-storing paper container material containing a straw insertion hole of Comparative Example 3.

The numerical symbols in the diagrams are as follows.

1: Low-density polyethylene layer
2: Printed layer
3: Paper layer
4: Aluminum foil layer
5: Biaxially oriented multilayer polyolefin film layer
6: Triple-layer unstretched polyolefin film layer
7: Low-density polyethylene film layer
8: Straw insertion hole
9: Single-layer unstretched linear low-density polyethylene film

Effects of the Invention

In cases in which the liquid-storing paper container material of the present invention is used to form a liquid-storing paper container, there is very little smell or taste of the resin or abnormal smells or tastes in the contents, very little of the taste components of the contents are adsorbed, and the flavor or taste of the contents therefore does not change. Moreover, superior heat-sealing strength is obtained.

Description of the Preferred Embodiments

First, a sealant A layer composed of a multilayer polyolefin film for the liquid-storing paper container material of the present invention will be described.

The *a* layer of the sealant A layer of the liquid-storing paper container material of the present invention is composed of one or a mixture of a propylene homopolymer, a propylene-based copolymer, and an ethylene-$\alpha$-olefin copolymer. The thickness of this layer is not particularly limited, but can usually be about 1 to 10 $\mu$m.

As described above, the *a* layer of the sealant A layer for the liquid-storing paper container material of the present invention is one or a mixture of a propylene homopolymer, a propylene-based copolymer, and an ethylene-$\alpha$-olefin copolymer, but of these selections, it is preferable to use a resin composed of a propylene-based copolymer alone, a mixture of a propylene-based copolymer and an ethylene-$\alpha$-olefin copolymer, or an ethylene-$\alpha$-olefin copolymer alone. It is further preferable to use a resin composed of a propylene-based copolymer alone, or a mixture of a propylene-based copolymer and an ethylene-$\alpha$-olefin copolymer. The mixture of a propylene-based copolymer and an ethylene-$\alpha$-olefin copolymer is preferably a mixture of a propylene-based copolymer containing 30 wt% or more of an ethylene-$\alpha$-olefin copolymer because of considerations related to the adhesion strength in cases in which a polyethylene-based resin, described later, is used for sandwich lamination.

When the liquid-storing paper container material of the present invention is manufactured, the surface of the *a* layer of the sealant A layer composed of a multilayer polyolefin film is bonded with the surface of another constituent material, e.g., another thermoplastic synthetic resin layer, an aluminum foil layer, a paper layer, or the like, and the sealant A layer composed of the multilayer polyolefin film is laminated with the other constituent material. Dry lamination, sandwich lamination, or another such method can be used as the method for laminating the other constituent material.

In cases in which the *a* layer of the sealant A layer of the liquid-storing paper container material of the present invention is composed of a resin of a propylene homopolymer or a propylene-based copolymer alone, the *a* layer surface is preferably subjected to corona treatment or another such surface treatment, and is preferably laminated with another constituent element by means of dry lamination using a two-part curing ester-based adhesive or another such adhesive because of considerations related to bonding strength. In cases in which a resin composed of a mixture of a propylene-based copolymer and an ethylene-α-olefin copolymer, or an ethylene-α-olefin copolymer alone, is selected as the resin constituting the a layer, lamination by sandwiching with the aid of a polyethylene-based resin can be used. In this case, even if the surface of the *a* layer is not subjected to corona treatment, the melted polyethylene-based resin, e.g., low-density polyethylene, linear low-density polyethylene, modified polyethylene obtained from such polyethylene, or the like, fusion-bonds firmly with the ethylene-α-olefin copolymer contained in the a layer, resulting in a laminated body having high bonding strength.

Possible examples of the propylene-based copolymer constituting the *a* layer of the sealant A layer of the liquid-storing paper container material of the present invention include either propylene-α-olefin copolymers containing 10 wt% or less of monomer units based on an α-olefin other than propylene, or mixtures thereof. Possible examples of the α-olefin include ethylene, 1-butene, 1-pentene, 1-hexene, 1-heptene, 1-octene, 1-nonene, 1-decene, 4-methyl-1-pentene, and the like. The copolymer may be a random polymer, a block polymer, or a graft polymer. Of these examples, a propylene-ethylene-1-butene terpolymer or a propylene-ethylene random copolymer is preferred as the propylene homopolymer or the propylene-based copolymer constituting the *a* layer of the sealant A layer of the liquid-storing paper container material of the present invention. These copolymers yield the greatest surface treatment effects from corona discharge, and can provide excellent dry lamination bonding strength as a constituent element of the liquid-storing paper container material of the present invention when laminated by dry lamination with another constituent element, e.g., another thermoplastic synthetic resin layer, an aluminum foil layer, a paper layer, or the like.

Possible examples of the ethylene-α-olefin copolymer constituting the *a* layer of the sealant A layer of the liquid-storing paper container material of the present invention include either ethylene-α-olefin copolymers containing 5 to 20 wt% of monomer units based on an α-olefin other than ethylene, or mixtures of these copolymers. Possible examples of the α-olefin include propylene, 1-butene, 1-pentene, 1-hexene, 1-heptene, 1-octene, 1-nonene, 1-decene, 4-methyl-1-pentene, and the like. The copolymer may be a random polymer, a block polymer, or a graft polymer. Of these examples, an ethylene-1-butene copolymer or an ethylene-1-hexene copolymer is preferred as the ethylene-α-olefin copolymer constituting the *a* layer of the sealant A layer. These polymers can, without corona discharge treatment, provide excellent sandwich lamination bonding strength as a constituent element of the liquid-storing paper container material of the present invention when laminated by sandwich lamination with the aid of a polyethylene-based resin to another constituent element of the liquid-storing paper container material, e.g., another thermoplastic synthetic resin layer, an aluminum foil layer, a paper layer, or the like.

The *b* layer of the sealant A layer of the liquid-storing paper container material of the present invention is composed of a propylene-based copolymer and an ethylene-α-olefin copolymer. The thickness of this *b* layer is not particularly limited, but can normally be about 10 to 20 μm.

Possible examples of the propylene-based copolymer in this case include propylene-α-olefin copolymers containing 2.5 to 6.0 wt% of monomer units based on an α-olefin other than propylene, or mixtures of these copolymers. Possible examples of the α-olefin include ethylene, 1-butene, 1-pentene, 1-hexene, 1-heptene, 1-octene, 1-nonene, 1-decene, 4-methyl-1-pentene, and the like.

The copolymer may be a random polymer, a block polymer, or a graft polymer. Of these examples, a propylene-ethylene random copolymer is preferred as the propylene-based copolymer constituting the *b* layer of the sealant A layer of the liquid-storing paper container material of the present invention in cases in which stronger adhesion is required between the a layer and the *b* layer. In cases in which a propylene homopolymer or a propylene-based copolymer is admixed into the a layer, a propylene-ethylene random copolymer is highly compatible with these resins and therefore yields stronger adhesion between the a layer and the *b* layer when used as the resin constituting the *b* layer.

Possible examples of the ethylene-α-olefin copolymer includes ethylene-α-olefin copolymers containing 5 to 20 wt% of monomer units based on an α-olefin other than ethylene, or mixtures of these copolymers. Possible examples of the α-olefin include propylene, 1-butene, 1-pentene, 1-hexene, 1-heptene, 1-octene, 1-nonene, 1-decene, 4-methyl-1-pentene, and the like. The copolymer may be a random polymer, a block polymer, or a graft polymer. Of these examples, an ethylene-1-butene copolymer is preferred as the ethylene-α-olefin copolymer constituting the *b* layer of the multilayer polyolefin film of the present invention in cases in which stronger adhesion is required between the *b* layer and *c* layer and also between the *b* layer and the *a* layer. In cases in which an ethylene-α-olefin copolymer is admixed into the *a* layer, an ethylene-1-butene copolymer is highly compatible with the ethylene-α-olefin copolymer and therefore yields stronger adhesion between the *b* layer and *c* layer and between the *b* layer and *a* layer when used as the resin constituting the *b* layer.

The propylene-based copolymer and the ethylene-α-olefin copolymer used in the *b* layer are preferably mixed so that the propylene-based copolymer/ethylene-α-olefin copolymer ratio is (50-75 wt%) / (25-50 wt%).

Including 50 to 75 wt% of the propylene-based copolymer and 25 to 50 wt% of the ethylene-α-olefin copolymer in the resin constituting the *b* layer increases the compatibility between the resin constituting the *a* layer and the resin constituting the *b* layer, and also increases the compatibility between the resin constituting the *c* layer and the resin constituting the *b* layer, as well as increasing the interlayer strength between the *a* layer and *b* layer and the interlayer strength between the *b* layer and *c* layer. Therefore, using this liquid-storing paper container material to form a liquid-storing paper container results in higher heat-sealing strength. The result of increasing the interlayer strength for the *a* layer, *b* layer, and *c* layer in this manner is that even greater heat-sealing strength is obtained because of the effect whereby the thickness of the *a* layer and *b* layer compensates for the thickness of the *c* layer if the thickness of *c* layer is reduced.

Furthermore, the liquid-storing paper container material, which is obtained by a method in which the propylene-based copolymer and the ethylene-α-olefin copolymer used in the *b* layer of the sealant A layer are mixed together in the aforementioned ratios, exhibits a greater effect of preventing the smell or taste of the resin, or any abnormal smells or tastes, from developing in the contents, and hence preventing the quality of the flavor or taste of the contents from deteriorating in cases in which the sealant A layer is used for the innermost surfaces of a liquid-storing paper container. This is because the peculiar smell or taste of an ethylene-based resin or any abnormal smell or taste is unlikely, as is the absorption of the taste components of the contents, as a result of the fact that including 50 to 75 wt% of a propylene-based copolymer in the resin constituting the *b* layer serves the function of blocking the infiltration of any amounts of taste components adsorbed in the *c* layer and of minimizing the absorption of these components into the liquid-storing paper container material of the present invention, and that the ethylene-α-olefin copolymer that constitutes the *b* layer along with the propylene-based copolymer is mixed at a ratio of 50 wt% or less, and the *b* layer contains a small amount of the ethylene-based resin.

Furthermore, the *c* layer of the sealant A layer of the liquid-storing paper container material of the present invention is composed of an ethylene-α-olefin copolymer.

Preferable examples of the ethylene-α-olefin copolymer in this case include ethylene-α-olefin copolymers containing 5 to 20 wt% of monomer units based on an α-olefin other than ethylene, or mixtures of these copolymers. Possible examples of the α-olefin include propylene, 1-butene, 1-pentene, 1-hexene, 1-heptene, 1-octene, 1-nonene, 1-decene, 4-methyl-1-pentene, and the like. The copolymer may be a random polymer, a block polymer, or a graft polymer. In cases in which the liquid-storing paper container of the present invention is formed so that the sealant A layer composed of the multilayer polyolefin film of the liquid-storing paper container constitutes the innermost surfaces, the *c* layer is directly heat-sealed with the sealant layer on the outermost surfaces, and constitutes the layer in direct contact with the contents.

Therefore, the ethylene-α-olefin copolymer constituting the *c* layer is preferably an ethylene-1-butene copolymer. The copolymer provides excellent heat-sealing strength with the polyethylene used as the sealant layer on the outermost surfaces of the liquid-storing paper container, and is not likely to create the smell or taste of the resin, or any abnormal smells or tastes, in the contents; nor is it likely to cause taste components to be adsorbed. The ethylene-1-butene copolymer preferably has a low degree of crystallinity. Specifically, the ethylene-1-butene copolymer preferably has a density of 0.880 g/cm$^3$ or greater and less than 0.900 g/cm$^3$. Furthermore, the ethylene-1-butene copolymer preferably has a peak temperature (Tp) of 55°C or less according to temperature rising elution fractionation (TREF), and the fraction of ethylene-ethylene-ethylene (EEE) chains in the chain distribution of continuous triads determined using an NMR-based molecular structural analysis of the ethylene-1-butene copolymer is preferably 0.80 or less. Thus, using a copolymer that has a low degree of crystallinity for the ethylene-1-butene copolymer inhibits the smell or taste of the resin or any abnormal tastes or smells from infiltrating the contents, and also inhibits absorption of taste components or the like.

The *c* layer requires a melting point of 60 to 140°C. If the melting point is less than 60°C, obstacles are encountered during handling or subsequent processing of the multilayer polyolefin film used for the liquid-storing paper container material of the present invention, such as blocking when the film is wound into a roll shape to be stored, or problems with the films not sliding easily against each other. If the melting point exceeds 140°C, it is difficult to heat seal the *c* layer with other elements, and it is therefore difficult to obtain the necessary heat-sealing strength between the sealant layer on the outermost surfaces of the liquid-storing paper container and the sealant layer on the innermost surfaces in cases in which the liquid-storing paper container material of the present invention is used to form a liquid-storing paper container (in cases in which the *c* layer is the layer that is directly heat-sealed with the sealant layers).

Furthermore, the *c* layer requires a thickness of 1 to 20 μm. If the thickness is less than 1 μm, the necessary

heat-sealing strength will of course not be obtained between the sealant layer of the outermost surfaces of the liquid-storing paper container and the sealant layer of the innermost surfaces in cases in which the liquid-storing paper container material of the present invention is used to form a liquid-storing paper container. The assumed reason for this is that at a thickness of less than 1 $\mu$m, the *c* layer is likely to be ruptured by the pressure of heat sealing. If the thickness exceeds 20 $\mu$m, the smell or taste of the resin, or any abnormal smells or tastes will develop, and/or the taste components of juices or the like will be adsorbed on the sealant layer of the innermost surfaces in cases in which the liquid-storing paper container material of the present invention is used to form a liquid-storing paper container.

When the *a* layer and *c* layer are used as the surface layers, the *b* layer is used as the middle layer, and the liquid-storing paper container material is used as the sealant A layer on the innermost surfaces of the liquid-storing paper container, the liquid-storing paper container material of the present invention exhibits effects whereby there is little change in the flavor or taste of the contents, and excellent heat-sealing strength is obtained with polyethylene or another such thermoplastic synthetic resin, which has been used in the past as a resin constituting the sealant layer on the outermost surfaces of liquid-storing paper containers.

Specifically, the functionality of the *a* layer can produce excellent adhesion strength in dry lamination and/or sandwich lamination between the multilayer polyolefin film and other constituent elements of the liquid-storing paper container material on which the film is laminated, e.g., other thermoplastic synthetic resin layers, aluminum foil layers, paper layers, or the like, by laminating the *a* layer on the inner sides and the *c* layer on the outer sides in the sealant A layer constituting the liquid-storing paper container material of the present invention. Also, in cases in which the liquid-storing paper container material is used to mold a liquid-storing paper container so that the sealant A layer is on the innermost surfaces of the liquid-storing paper container and the sealant B layer is on the outermost surfaces of the liquid-storing paper container, the functionality of the *c* layer can produce excellent heat-sealing strength between the sealant A layer constituting the innermost layers of the liquid-storing paper container and the sealant B layer constituting the outermost layers of the liquid-storing paper container.

As part of the liquid-storing paper container material of the present invention in the above-described liquid-storing paper container, the *c* layer composed of an ethylene-$\alpha$-olefin copolymer, which is an ethylene-based resin, is in direct contact with the contents. In cases in which *a* layer composed of an ethylene-based resin is used in the liquid-storing paper container as the layer in direct contact with the contents, there is a danger that the contents will develop the smell or taste of the resin, or an abnormal taste or smell, or that taste components will be adsorbed. However, using a multilayer structure in the liquid-storing paper container material of the present invention and sequentially laminating the *a* layer, the *b* layer, and the *c* layer composed of an ethylene-$\alpha$-olefin copolymer makes it possible to maintain excellent characteristics pertaining to heat-sealing strength, and to greatly reduce the thickness of the *c* layer to 1 to 20 $\mu$m. The contents are therefore hardly susceptible to adverse effects, and there is no possibility of such problems.

In cases in which the liquid-storing paper container material of the present invention is manufactured, the multilayer polyolefin film for the liquid-storing paper container material is laminated with the other constituent elements of the liquid-storing paper container material. In cases in which the *a* layer constituting one of the surface layers of the sealant A layer of the liquid-storing paper container material of the present invention is composed of a resin of either a propylene homopolymer or a propylene-based copolymer alone, the lamination means is preferably dry lamination, in which case the *a* layer is subjected to corona discharge treatment to increase adhesion in order to enhance the laminated adhesion strength. Since the *c* layer constituting the other surface layer in the liquid-storing paper container material of the present invention is configured from an ethylene-$\alpha$-olefin copolymer, blocking is not likely in cases in which the film is stored in a roll shape, even if adhesion of the a layer, which is the first surface layer, is increased in this manner. The reason for this is believed to be that since different resins are in direct contact with each other even when the multilayer film for the liquid-storing paper container is stored in a roll shape, blocking is reduced by the anti-blocking effects resulting from the differences between the resins.

In cases in which an ethylene-$\alpha$-olefin copolymer is admixed into the resin constituting the a layer, which is one surface layer of the liquid-storing paper container material of the present invention, the surface of the *a* layer does not need to be subjected to corona discharge treatment because using sandwich lamination with the aid of a polyethylene-based resin as the lamination means results in high laminated adhesion strength. Therefore, it is believed that the multilayer polyolefin film for the liquid-storing paper container of the present invention is not likely to cause blocking when stored in a roll shape, even if the same ethylene-$\alpha$-olefin copolymer as in the *c* layer constituting the other surface layer is admixed into the *a* layer constituting the first surface layer.

In addition to firmly bonding the *a* layer and the *c* layer as previously described, the *b* layer in the liquid-storing paper container material of the present invention is believed to serve the function of blocking infiltration of any taste components adsorbed on the *c* layer and minimizing adsorption of such components.

The thickness of the multilayer polyolefin film itself, which constitutes the sealant A layer of the liquid-storing paper container material of the present invention, is not particularly limited, but can normally be appropriately selected from a thickness range of 15 to 60 $\mu$m.

The method for manufacturing the multilayer polyolefin film for the liquid-storing paper container of the present invention is not particularly limited, and conventional methods can be used. Suitable examples include a method for melt co-extruding resins for the *a* layer, *b* layer, and *c* layer from separate extruders with the use of a feed block scheme that uses a multilayer die or a single-layer die, and then cooling, solidifying, and continuously winding the resins with the aid of temperature-adjustable rolls; a method for melt co-extruding the resins and then air-cooling, solidifying, and continuously winding the resins with the aid of an air chamber or an air knife; a method for melt co-extruding the resins and then cooling, solidifying, and continuously winding the resins by means of water-cooling with the use of a temperature-adjustable water bath; or a method for using inflation and continuously winding the resins while cooling and solidifying the resins with the aid of air-cooling or water-cooling. After the resins are cooled and solidified, the surface of the film may be subjected as necessary to corona discharge treatment, flame treatment, or other such conventional surface treatments. As described above, the multilayer polyolefin film for the liquid-storing paper container of the present invention can be laminated by means of dry lamination or sandwich lamination on the other constituent elements of the liquid-storing paper container material, e.g., paper, aluminum foil, polyolefin films, and polyolefin resins, but there are also no problems with direct extrusion lamination of the film onto the other constituent elements of the liquid-storing paper container material while melt co-extruding the resins with the aid of the aforementioned feed block scheme that uses a multilayer die or a single-layer die.

Next, the liquid-storing paper container material of the present invention will be described.

In the liquid-storing paper container material of the present invention, low-density polyethylene can be suitably used as the thermoplastic synthetic resin constituting the sealant B layer. However, the resin is not limited to this option alone, and other suitable possibilities include linear low-density polyethylene, high-density polyethylene, ethylene-propylene copolymers, ethylene-butene copolymers, propylene-butene copolymers, propylene homopolymers, propylene-ethylene random copolymers, propylene-ethylene block copolymers, propylene-ethylene-butene copolymers, ethylene-vinyl acetate copolymers, ethylene-acrylate copolymers, ethylene-methacrylate copolymers, ethylene-methyl acrylate copolymers, ethylene-ethyl acrylate copolymers, ethylene-methyl methacrylate copolymers, other such polymers, and mixtures thereof.

The thermoplastic synthetic resin constituting the sealant B layer may be the same resin used in the *c* layer of the multilayer polyolefin film for the liquid-storing paper container constituting the sealant A layer, or another resin that heat seals adequately with the *c* layer. The thickness of the sealant B layer is preferably 10 to 50 $\mu$m.

In the liquid-storing paper container material of the present invention, the paper constituting the paper layer is not particularly limited. Generally, it is possible to suitably use paperboard made from virgin pulp having a basis weight of 150 to 400 g/m$^2$ from coniferous trees or broadleaf trees.

The liquid-storing paper container material of the present invention is made by laminating at least a paper layer, a sealant B layer composed of a thermoplastic synthetic resin as one outermost layer, and a sealant A layer composed of the multilayer polyolefin film for the liquid-storing paper container as the other outermost layer. In the sealant A layer, the multilayer polyolefin film for the liquid-storing paper container can be laminated over the inner side of the *a* layer so as to face the outer side of the *c* layer. In other words, as long as the laminated structure has the following sequence: sealant B layer composed of a thermoplastic synthetic resin as one outermost layer/.../paper layer/.../sealant A layer composed of the multilayer polyolefin film of the liquid-storing paper container of the present invention as the other outermost layer (*a* layer/*b* layer/*c* layer), any other layers may be laminated in any other sequence.

For example, in the liquid-storing paper container material, a gas barrier layer may be provided between the paper layer and the sealant A layer composed of the multilayer polyolefin film for the liquid-storing paper container of the present invention. This gas barrier layer can be configured from conventional materials. The most typical example of such a layer is aluminum foil. A layer configured from aluminum foil not only functions as a gas barrier layer, but also functions as a light-blocking layer, and prevents the contents from oxidizing and being spoiled by light. In cases in which a material other than aluminum foil is used for the gas barrier layer, providing a separate light-blocking layer makes it possible to prevent the contents from being spoiled by light. In cases in which the contents are not inherently susceptible to spoilage by light, this light-blocking layer is not particularly necessary. The thickness of the aluminum foil layer as a gas barrier layer is not particularly limited. Normally, a thickness of 7 to 12 $\mu$m is suitable.

A layer intended to improve the strength of the paper container can also be provided between the gas barrier layer and the sealant A layer composed of the multilayer polyolefin film for the liquid-storing paper container of the present invention.

A possible example of the material constituting this layer (hereinafter also referred to as a "reinforcing layer") is a biaxially oriented multilayer polyolefin film that has a plane orientation index of 0.6 or less, and that is made by a method in which a biaxially oriented polyolefin film II layer composed of 50 to 80 wt% of polyolefin (hereinafter referred to as "resin C") having a melting point of 154 to 164˚C, and 20 to 50 wt% of polyolefin (hereinafter referred to as "resin D") having a melting point of 105 to 145˚C, is laminated over at least one side of a polyolefin film I layer composed of 75 to 100 wt% of polyolefin (hereinafter referred to as "resin A") having a melting point of 130 to 145˚C, and 0 to 25 wt% of polyolefin (hereinafter referred to as "resin B") having a melting point of 154 to 164˚C. This biaxially oriented multilayer polyolefin film has extremely beneficial characteristics as a material for the reinforcing film of the liquid-storing paper container material, in that this film greatly improves the buckling strength of liquid-storing paper container molded from the liquid-storing paper container material on which the film is laminated, and that straws are also easily inserted through the film. The thickness of the biaxially oriented multilayer polyolefin film layer as the reinforcing layer is preferably within a range of 10 to 80 μm.

In the biaxially oriented multilayer polyolefin film, possible examples of resin A include propylene-α-olefin copolymers containing 2.5 wt% or more and less than 10 wt% of monomer units based on an α-olefin other than propylene, or mixtures of these polymers. Possible examples of the α-olefin include ethylene, 1-butene, 1-pentene, 1-hexene, 1-heptene, 1-octene, 1-nonene, 1-decene, 4-methyl-1-pentene, and the like. The copolymer may be a random polymer, a block polymer, or a graft polymer. Of these examples, a propylene-ethylene random copolymer, a propylene-ethylene block copolymer, or a propylene-ethylene-butene copolymer is preferred.

Possible examples of resin B include propylene homopolymers, propylene-α-olefin copolymers containing less than 3 wt% of monomer units based on an α-olefin other than propylene, or mixtures of these polymers. Possible examples of the α-olefin include ethylene, 1-butene, 1-pentene, 1-hexene, 1-heptene, 1-octene, 1-nonene, 1-decene, 4-methyl-1-pentene, and the like. Of these examples, either a propylene homopolymer or a propylene-ethylene random copolymer containing 1 wt% or less of monomer units based on ethylene is preferred.

Possible examples of resin C include propylene homopolymers, propylene-α-olefin copolymers containing less than 3 wt% of monomer units based on an α-olefin other than propylene, or mixtures of these polymers. Possible examples of the α-olefin include ethylene, 1-butene, 1-pentene, 1-hexene, 1-heptene, 1-octene, 1-nonene, 1-decene, 4-methyl-1-pentene, and the like. Of these examples, either a propylene homopolymer or a propylene-ethylene random copolymer containing 1 wt% or less of monomer units based on ethylene is preferred.

Possible examples of resin D include propylene-α-olefin copolymers containing 3 wt% or more and less than 30 wt% of monomer units based on an α-olefin other than propylene, or mixtures of these polymers. Possible examples of the α-olefin include ethylene, 1-butene, 1-pentene, 1-hexene, 1-heptene, 1-octene, 1-nonene, 1-decene, 4-methyl-1-pentene, and the like. The copolymer may be a random polymer, a block polymer, or a graft polymer. Of these examples, a propylene-ethylene-butene copolymer, an ethylene-propylene copolymer, an ethylene-butene copolymer, or a propylene-butene copolymer is preferably mixed.

The biaxially oriented multilayer polyolefin film can be suitably manufactured by the method shown below. First, a multilayer die of at least two or more layers is used to obtain a sheet by laminating a layer composed of a resin for the polyolefin film II layer on one or both sides of a layer composed of a resin for the polyolefin film I layer, the sheet is uniaxially stretched in the MD direction (the longitudinal direction of the film), and then the film is biaxially stretched in the TD direction (the direction orthogonal to the longitudinal direction of the film). At this time, as one of the resins from among resin A and resin B constituting the resin for the polyolefin film I layer, resin A is melted by means of a tenter heat treatment in the biaxial stretching tenter to bring the polyolefin film I layer to a substantially non-oriented or slightly oriented state.

At this time, resin C and resin D constituting the resin for the polyolefin film II layer behave so that resin D undergoes orientation relaxation and partial melting, whereas resin C remains orientated. As a result, the polyolefin film II layer retains orientation, yielding a biaxially oriented multilayer polyolefin film wherein a biaxially oriented polyolefin film II layer is laminated over one or both sides of the polyolefin film I layer. In this case, the stretch ratio is not particularly limited, but can typically be selected from a range of 4 to 8 times in the MD direction and 6 to 13 times in the TD direction.

The term "plane orientation index" refers to an index that expresses the degree of orientation of the 010 plane of a polypropylene crystal in relation to a plane parallel to the laminated film surface, as determined by X-ray diffraction. Specifically, X-rays were directed from a direction perpendicular to the film surface while the biaxially oriented multilayer polyolefin film was rotated at high speed around an axis perpendicular to the film surface to measure diffraction intensity. The resulting X-ray diffraction intensity curve was separated into amorphous and crystalline peaks, and the plane orientation index was calculated using the following formula (1) on the basis of the peak intensity ratio of the 111 reflection ($2\theta=21.4°$) and 040 reflection ($2\theta=17.1°$) from the polypropylene crystal (α crystal).

$$\texttt{Plane orientation index P101 = log \{1.508 × I(111)/I(040)\} (1)}$$

wherein

I(111): 111 reflection peak intensity (counts)
I(040): 040 reflection peak intensity (counts)

According to Z. MenCik, the coefficient 1.508 in formula (1) is found to be the intensity ratio between 1(040) and I(111); i.e., I(040)/I(111) = 116.9/77.5 = 1.508 (the inverse of the value I(111)/I(040), when the polypropylene crystals are in completely random orientation (Z. MenCik, Journal of Macromolecular Science, Physics B6, 101 (1972)). For example, if the 010 plane of the polypropylene crystal the measured specimen is of completely random orientation with respect to the film surface, the value of [P010] is 0, and the value of [P010] increases as the 010 plane of the polypropylene crystal becomes oriented more parallel to the film surface, while [P010] becomes negative if the 010 plane is oriented perpendicular to the film surface.

In the liquid-storing paper container material of the present invention, a printed layer can be provided between the paper layer and the sealant B layer. The printed layer is a layer that displays a design for enhancing the commercial value of the contents of the liquid-storing paper container formed from the liquid-storing paper container material, or displays the name of the contents, the ingredients, the quantity, or legal logos in print. The printed layer may be directly printed on the paper layer, but laminating a layer composed of a thermoplastic synthetic resin on the paper layer and performing printing on the thermoplastic synthetic resin layer allows for simple and shallow printing, and is preferred for the improved image of the print because gravure printing or another such fine printing method is used. The printing method is not particularly limited, and aside from the aforementioned gravure printing, anastatic printing or offset printing can also be used.

In this case, the thickness of the layer composed of the thermoplastic synthetic resin laminated on the paper layer is preferably 5 to 30 $\mu$m. Possible examples of the thermoplastic synthetic resin include low-density polyethylene, linear low-density polyethylene, high-density polyethylene, ethylene-propylene copolymers, ethylene-butene copolymers, propylene-butene copolymers, propylene homopolymers, propylene-ethylene random copolymers, propylene-ethylene block copolymers, propylene-ethylene-butene copolymers, ethylene-vinyl acetate copolymers, ethylene-acrylate copolymers, ethylene-methacrylate copolymers, ethylene-methyl acrylate copolymers, ethylene-ethyl acrylate copolymers, ethylene-methyl methacrylate copolymers, other such polymers, and mixtures thereof.

Furthermore, in addition to the above-described liquid-storing paper container material of the present invention, an adhesive layer can be provided as necessary between these layers to firmly bond these layers and/or other layers. The adhesive layer is composed of, e.g., low-density polyethylene, linear low-density polyethylene, modification products thereof, or other such adhesive polyolefin resins or two-part curing ester-based adhesives or the like.

Antistatic agents, anti-blocking agents, lubricants, antioxidants, chlorine supplements, crystal nucleation agents, and various other additives can be mixed as necessary with all of the layers constituting the liquid-storing paper container material of the present invention. Since the *c* layer of the multilayer polyolefin film for the liquid-storing paper container constitutes the layer in direct contact with the contents of the liquid-storing paper container in cases in which the liquid-storing paper container is manufactured from the liquid-storing paper container material of the present invention, additives that may adversely affect the contents are preferably either not added to this layer, or added in only extremely small amounts. In cases in which additives cannot be added to the *c* layer in this multilayer polyolefin film, the additives can instead be added to other layers, e.g., the a layer, whereby the necessary properties can be obtained, maintained, or improved. For example, in cases in which the multilayer polyolefin film for the liquid-storing paper container of the present invention is formed into a roll shape, a lubricant can be used to create an appropriate amount of slipperiness between the *a* layer surface and the *c* layer surface for the purpose of preventing wrinkles when the film is rolled. Adding the lubricant primarily to the *a* layer and adjusting the amount of lubricant makes it possible to achieve this objective even if a small amount of lubricant or no lubricant at all is added to the c layer.

The liquid-storing paper container material of the present invention may be obtained by any method. For example, a liquid-storing paper container material can be obtained through the following method, wherein a sealant B layer composed of a thermoplastic synthetic resin, a printed layer, a thermoplastic synthetic resin layer, a paper layer, an aluminum foil layer as a barrier layer, the previously described biaxially oriented multilayer polyolefin film as a reinforcing layer, and the multilayer polyolefin film of the present invention as the sealant A layer (*a* layer/*b* layer/*c* layer) are laminated in sequence from one outermost layer to the other outermost layer.

First, after one surface of the biaxially oriented multilayer polyolefin film is coated with an adhesive, the multilayer polyolefin film for the liquid-storing paper container of the present invention, which has been formed in advance, is laminated by dry lamination so that the *a* layer is adjacent to the adhesive surface of the biaxially oriented multilayer polyolefin film. Alternatively, the pre-formed multilayer polyolefin film for the liquid-storing paper container of the present invention is laminated by sandwich lamination via a polyethylene-based resin so that the *a* layer and the biaxially oriented multilayer polyolefin film are adjacent to each other. As another alternative, after one surface of the biaxially oriented multilayer polyolefin film is coated with an anchor coating agent, a multilayer die may be used to laminate the resins constituting the a layer, b layer, and *c* layer of the multilayer polyolefin film for the liquid-storing paper container of the present invention by co-extruding the resins with a melt extruder so that the *a* layer is adjacent to the anchor coated surface of the biaxially oriented multilayer polyolefin film. Thus, after the multilayer polyolefin film for the liquid-storing paper container of the present invention and the biaxially oriented multilayer polyolefin film are laminated, an aluminum foil layer is laminated over the other surface of the biaxially oriented multilayer polyolefin film to obtain a laminated product 1.

A thermoplastic synthetic resin layer is laminated over the paper layer, and printing is performed on the thermoplastic synthetic resin to obtain a printed product 1. At this time, round holes may be machined as necessary into the printed product 1 as straw insertion holes or content pour holes. The paper layer side of the printed product 1 and the aluminum foil layer side of the laminated product 1 are then laminated by sandwich lamination using an adhesive polyolefin resin, and the thermoplastic synthetic resin constituting the sealant B layer is extruded and laminated over the printed layer side, completing the product. This is merely one example. In the present invention, as long as the intended liquid-storing paper container material can ultimately be obtained, any other method may be used to obtain the material.

Lastly, the liquid-storing paper container of the present invention will be described.

The liquid-storing paper container material of the present invention can be used as a material for any type of liquid-storing paper container. For example, in cases in which this liquid-storing paper container material is used to mold an aseptic liquid-storing paper container obtained through aseptic packaging, crease lines are formed using a creaser in a continuous belt-form liquid-storing paper container material obtained as described above, and this creased liquid-storing paper container material is continuously disinfected with hydrogen peroxide using an aseptic filling machine, e.g., a UP-FUJI filling machine made by Shikoku Kakoki Co., Ltd. After being disinfected with hydrogen peroxide, the material is sealed in the longitudinal direction in a sterile chamber and molded into a tube, a stored substance (contents) is filled into the liquid-storing paper container material formed into a tube, transverse seals are created at specific intervals in the transverse direction in the tube-shaped liquid-storing paper container material, the liquid-storing paper container material is cut along the transverse seal portions, and the material is folded along the creases and formed into the final shape to obtain a liquid-storing paper container. The shape of the liquid-storing paper container is not particularly limited. For example, even an aseptic liquid-storing paper container may have a polygonal pillar shape or an asymmetrical shape instead of a brick shape, and the shapes of the top and bottom parts may also be modified as long as the container can be formed in the filling machine. The resulting liquid-storing paper container may have straw holes or opening holes formed at appropriate positions as necessary, and may also have plugs, pull tabs, incisions, or the like. Straws may also be added.

Examples

Examples are presented below to describe the present invention in detail, but the present invention is not limited to these examples. The characteristics of the films in the following examples and comparative examples were evaluated with the following measurement methods.

The biaxially oriented multilayer polyolefin film used in the examples and comparative examples was cured for two days at 40˚C after manufacture, whereupon samples were obtained for use in the measurement methods. These samples were kept for 24 hours in a state in which the temperature was 23˚C and the relative humidity was 50%. The characteristics were measured under these conditions.

The laminated product obtained as a result of the lamination steps as an intermediate article was cured for three days at 40˚C after being laminated, and the temperature and humidity were then adjusted to 23˚C and 50% RH, respectively, for 24 hours. Measurements were taken under these conditions.

(1) Thickness

Thickness was measured with a mechanical thickness gauge (OMV-25DM micrometer made by Mitsutoyo Japan).

(2) Resin melting point

The resin and the film were melted at 235˚C using a differential scanning calorimeter (DSC 6200R made by Seiko Instruments Inc.) and kept for 10 minutes in this state. The temperature was subsequently lowered at a rate of 10˚C per minute to 30˚C and then raised again at a rate of 10˚C per minute to 235˚C, whereupon the melting point was measured.

(3) Copolymer compositions and the fraction of EEE chains

A nuclear magnetic resonance spectrometer (JNM-GSX-270 made by JEOL Ltd.) was used to perform calculations based on a $^{13}$C-NMR spectrum measured at 120˚C using orthodichlorobenzene/benzene $D_6$ (volume: 90/10) as a solvent. The peaks were within the spectrum and the copolymer composition and the assigned fraction of EEE chains were calculated according to the methods of J.C. Randall et. al. (Eric T. Hsieh and James C. Randall, Macromolecules 1982, 15.365). The fraction of the EEE chains in the ethylene-1-butene copolymer is the fraction of the EEE chains in relation to a total of six continuous triads: EEE, BEE, BEB, EBE, BBE, BBB (ethylene (E), 1-butene (B)), and expresses the ratio of structures in which ethylene units are continuous. The degree of crystallization in the ethylene-1-butene copolymers typically tended to increase as the fraction of EEE chains increased.

(4) Plane orientation index

Measurements were performed under the following conditions using an X-ray diffractometer JDX-3500 made by JEOL Ltd.

Target: copper (Cu-Kα radiation)
Tube voltage-tube current: 40 kV-400 mA
X-ray irradiation method: perpendicular beam penetration
Monochromatization: graphite monochromator
Divergence slits: 0.2 mm
Receiving slits: 0.4 mm
Detector: scintillation counter
Angle range: 9.0˚ to 31.0˚
Step angle: 0.04˚
Counting time: 3.0 sec
Specimen rotation speed: 120 rpm

A test film was cut into dimensions of 20 mm x 20 mm, and several tens of the resulting film samples were stacked to a thickness of about 3 mm. The stack was mounted on a rotating specimen stage for a penetration method attached to a wide-angle goniometer, and measurements were carried out. The background caused by air scattering and the like was removed in a diffraction angle (2θ) range of 9˚ to 31˚, whereupon peaks were separated into amorphous peaks and crystalline peaks by a typical peak separation method using a Gaussian function and a Lorenz function.
The plane orientation index was calculated with the above-described method by using the following formula (1) on the basis of the peak intensity ratio between the 040 reflection and the 111 reflection.

$$\text{Plane orientation index P010} = \log \{1.508 \times I(111)/I(040)\} \quad (1)$$

wherein

I(111): 111 reflection peak intensity (counts)
I(040): 040 reflection peak intensity (counts)

(5) Melt mass flow rate;

The melt mass flow rate (hereinafter abbreviated as MFR) was measured in accordance with JIS-K7210. The MFR of the propylene homopolymer, the propylene-based copolymer, and the butene ethylene-1-butene copolymer was measured at 230˚C. The MFR of the ethylene-1-hexene copolymer and the low-density polyethylene film (AJ-5) was measured at 190˚C.

(6) Resistance to being pierced with a straw

Ten evaluators manually inserted plastic straws through the straw hole in brick-shaped liquid-storing paper containers obtained in the examples and comparative examples. The ease with which the straw punctured the hole was evaluated using three criteria, as described below.

○ Little effort required
Δ Some degree of resistance was encountered
✕ Could not insert straw through material, or container deformed

(7) Adhesive strength of laminate

Samples measuring 15 mm in width and 150 mm in length were cut from a laminated object using the machine direction as the lengthwise direction. The interface at which the adhesive strength of the laminate was to be measured was delaminated 50 mm in the machine direction. A peel test was performed at a peel angle of 90˚ and a pulling rate of 20 mm/min using a tensile tester (AG500 manufactured by Shimadzu Corp.) to measure the adhesive strength of the laminate.

(8) Wetness index

Measurements were performed according to JIS-Z1712.

(9) Buckling strength of liquid-storing paper container

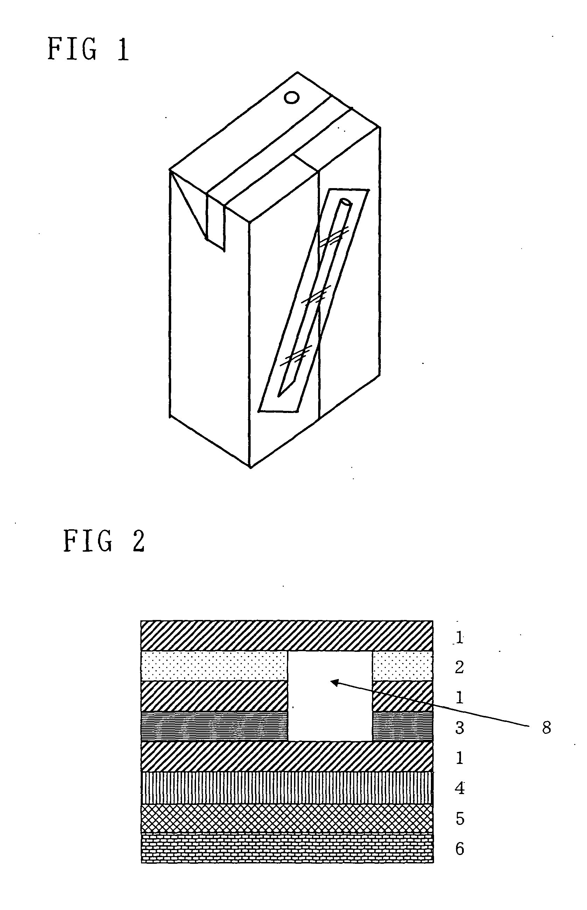

The brick-shaped liquid-storing paper containers obtained in the examples and comparative examples were positioned upright (as shown in FIG. 1) in a Strograph tester (Model M2, manufactured by Toyo Seiki Seisaku-sho Ltd), so that the upper surface with the straw hole faced upward and the bottom side on the opposite end thereof faced downward. A strength test was performed at a compression rate of 200 mm/min using a 1.96-kN load cell. The initial peak value was used as the buckling strength (N).

(10) Resin smell

The brick-shaped liquid-storing paper containers obtained in the examples and comparative examples were kept at a temperature of 60˚C using a warmer. Ten evaluators performed an organoleptic evaluation on the containers after five and ten days had elapsed, and rated the resin smell according to the five criteria described below.

1    Virtually none
2    Slight
3    Distinct
4    Strong
5    Very strong

(11) Crystallinity

The peak temperature (Tp) according to temperature rising elution fractionation (TREF) was measured under the following conditions using an SSC-7300ATREF automatic TREF apparatus manufactured by Senshu Scientific Co., Ltd.

Solvent: Orthodichlorobenzene
Flow rate: 1 mL/min
Rate of temperature increase: 40˚C/hr
Detection: IR detector
Measurement coefficient: 3.41 $\mu$m
Column: 4.6 mm (inside diameter) x 150 mm
Packing: Chromosorb P
Concentration: 5 mg/mL
Amount introduced: 100 mL

A sample solution was introduced into the column at 145˚C, and gradually cooled to 10˚C at a rate of 40˚C/hr. Once the sample polymer had been adsorbed onto the surface of the packing, the temperature of the column was increased according to the conditions indicated above. The IR detector was used to measure the concentration of the resulting polymer precipitate at the respective temperature levels. The peak temperature recorded at the maximum amount of precipitate was used as the TREF temperature (˚C). The TREF temperature increased when the degree of crystallization was higher, and conversely decreased when the degree of crystallization was lower.

(12) Density

Measurements were performed according to ASTM D1505.

Example 1

First, a biaxially oriented multilayer polyolefin film using a reinforcing layer was created as follows.

95 wt% of a propylene-ethylene random copolymer (4.6 wt% of monomer units based on ethylene, melting point: 135˚C, MFR: 2.1 g/10 min) was used as resin A constituting the polyolefin film I layer, and 5 wt% of a propylene-ethylene random copolymer (0.4 wt% of monomer units based on ethylene, melting point: 156˚C, MFR: 2.3 g/10 min) was used as resin B constituting the polyolefin film I layer. Resin A and resin B were mixed to create the resin of the polyolefin film I layer.

60 wt% of a propylene-ethylene random copolymer (0.4 wt% of monomer units based on ethylene, melting point: 156˚C, MFR: 2.3 g/10 min) was used as resin C constituting the biaxially oriented polyolefin film II layer, and 40 wt% of a propylene-ethylene-1-butene terpolymer (6.2 wt% of monomer units based on ethylene and 5.1 wt% of monomer units based on 1-butene, melting point: 130˚C, MFR: 5.0 g/10 min) was used as resin D constituting the biaxially oriented polyolefin film II layer. Resin C and resin D were mixed to create the resin of the biaxially oriented polyolefin film II layer.

A multilayer die was used to co-extrude the resin of the biaxially oriented polyolefin film II layer so that the resin was laminated over both sides of the resin of the polyolefin film I layer, and an unstretched sheet was obtained.

The sheet was stretched in a ratio of 5.8 in the MD direction, then stretched in a ratio of 10 in the TD direction, subjected to heat treatment for 15 seconds at a tenter heat treatment temperature of 167˚C, and then subjected to corona treatment on both surfaces, resulting in a 20-$\mu$m biaxially oriented multilayer polyolefin film, wherein the thickness of the polyolefin film I layer was 15 $\mu$m, the thickness of the biaxially stretched and oriented polyolefin film II layer laminated on both sides was 2.5 $\mu$m on both sides, and the plane orientation index was -0.361. The wetness index of the biaxially oriented multilayer polyolefin film was 41 mN/m on both sides.

Next, the liquid-storing paper container material of the present invention was created in the following manner.

A triple-layer unstretched polyolefin film was used as the sealant A layer. The film was composed of the following layers obtained by triple-layer co-extrusion: a) a layer 6 $\mu$m thick composed of a propylene-ethylene-1-butene terpolymer (2.3 wt% of monomer units based on ethylene and 1.3 wt% of monomer units based on 1-butene, melting point: 137˚C, MFR: 7.0 g/10 min); b) a layer 20 $\mu$m thick composed of a resin obtained by mixing 70 wt% of a propylene-ethylene random copolymer (3.6 wt% of monomer units based on ethylene, melting point 146˚C, MFR: 7.0 g/10 min) with 30 wt% of an ethylene-1-butene copolymer (15 wt% of monomer units based on 1-butene, melting point: 69˚C, MFR: 6.7 g/10 min); and c) a layer 4 $\mu$m thick composed of an ethylene-1-butene copolymer (15 wt% of monomer units based on 1-butene, melting point 69˚C, MFR: 6.7 g/10 min, TREF temperature : 45.1˚C, density: 0.885 g/cm$^3$, EEE Chain fraction: 0.67). These three layers were laminated in the sequence a/b/c for a total thickness of 30 $\mu$m. The surface of the *a* layer of the triple-layer unstretched polyolefin film was subjected to corona discharge treatment, and this corona discharge-treated surface was laminated over one side of the above-described biaxially oriented multilayer polyolefin film by dry lamination at a drying temperature of 80˚C with the aid of a two-part curing ester-based adhesive, resulting in a laminated film having a thickness of 52 $\mu$m. The wetness index of the biaxially oriented multilayer polyolefin film side of this laminated film was 39 mN/m.

Next, aluminum foil having a thickness of 7 $\mu$m was dry-laminated to the biaxially oriented multilayer polyolefin film side of the laminated film at a drying temperature of 80˚C with the aid of the same two-part curing ester-based adhesive, resulting in a laminated body 1 having a triple-layer configuration and a thickness of 61 $\mu$m, wherein the triple-layer unstretched polyolefin film, the biaxially oriented multilayer polyolefin film, and the aluminum foil were laminated in sequence. The laminated body 1 was allowed to stand for three days, and the laminated strengths between layers were measured. After the laminated body 1 was allowed to stand for three days, the adhesive strength of the laminate between the triple-layer unstretched polyolefin film and the biaxially oriented multilayer polyolefin film was 4.61 N/15 mm. The adhesive strength of the laminate between the aluminum foil and the biaxially oriented multilayer polyolefin film was 3.39 N/15 mm.

Low-density polyethylene was melt-extruded and laminated on paperboard having a basis weight of 200 g/m$^2$ to form a low-density polyethylene layer having a thickness of 15 $\mu$m, and printing was performed on the low-density polyethylene layer to obtain a printed body 1.

Next, a hole was punched in the printed body 1 to form a straw insertion hole, and the side of the printed body facing the paperboard was laminated to the side of the laminated body 1 facing the aluminum foil by means of sandwich lamination with the aid of low-density polyethylene, resulting in a laminated body 2 wherein a printed layer, a low-density polyethylene layer, a paper layer, a low-density polyethylene layer, an aluminum foil layer, biaxially oriented multilayer polyolefin layer, and a triple-layer unstretched polyolefin film were laminated in sequence. Furthermore, low-density polyethylene was laminated by means of extrusion lamination as a sealant layer onto the printed layer of the laminated body 2, resulting in a liquid-storing paper container material wherein a low-density polyethylene layer (thickness: 15 $\mu$m), a printed layer, a low-density polyethylene layer (thickness: 15 $\mu$m), a paper layer (paperboard having a basis weight of 200 g/m$^2$), a low-density polyethylene layer (thickness: 30 $\mu$m), an aluminum foil layer (thickness: 7 $\mu$m), a biaxially oriented multilayer polyolefin film (thickness: 20 $\mu$m), and a triple-layer unstretched polyolefin film (thickness:

30 $\mu$m) were laminated in sequence from the outermost layer side.

Aside from the biaxially oriented multilayer polyolefin film and the triple-layer unstretched polyolefin film, the following materials were used at this time.

MIRASON 16P made by Mitsui Chemicals was used for the low-density polyethylene in each case, paperboard having a basis weight of 200 g/m$^2$ made from a virgin pulp of coniferous trees and broadleaf trees was used for the paperboard, and a JIS-standard reference product 1N30 was used for the aluminum foil.

The resulting liquid-storing paper container material was slit into belt shapes of specific widths and used in aseptic packaging on a UP-FUJI-MA80 machine made by Shikoku Kakoki Co., Ltd, resulting in a brick-shaped liquid-storing paper container 250 mL in volume filled with activated carbon filtered water for an organoleptic evaluation.

The resulting brick-shaped liquid-storing paper container was measured for buckling strength and evaluated for ease of straw insertion as well as resin smell, and the results are shown in Table 1.

<Comparative Example 1>

A liquid-storing paper container material was created in the following manner.

A low-density polyethylene film (LDPE, melting point: 106˚C, MFR: 7.5 g/10 min, TREF temperature: 72.5˚C, density: 0.917 g/cm$^3$) having a thickness of 20 $\mu$m was laminated by means of dry lamination at a drying temperature of 80˚C, with the aid of a two-part curing ester-based adhesive, onto one side of the biaxially oriented multilayer polyolefin film created in Example 1, resulting in a laminated film having a thickness of 42 $\mu$m. The wetness index of the biaxially oriented multilayer polyolefin film side of this laminated film was 40 mN/m.

Next, aluminum foil having a thickness of 7 $\mu$m was dry laminated in the same manner at a drying temperature of 80˚C with the aid of a two-part curing ester-based adhesive onto the biaxially oriented multilayer polyolefin film side of the laminated film, resulting in a laminated body 1 having a thickness of 50 $\mu$m and a triple-layer configuration in which a low-density polyethylene film, a biaxially oriented multilayer polyolefin film, and aluminum foil were laminated in sequence. The laminated body 1 was allowed to stand for three days, and the lamination strengths between the layers were measured. The lamination strength between the low-density polyethylene film and the biaxially oriented multilayer polyolefin film of the laminated body 1 was 4.88 N/15 mm. The lamination strength between the aluminum foil and the biaxially oriented multilayer polyolefin film was 3.51 N/15 mm.

Low-density polyethylene was melt-extruded and laminated on paperboard having a basis weight of 200 g/m$^2$ to form a low-density polyethylene layer having a thickness of 15 $\mu$m, and printing was performed on the low-density polyethylene layer to obtain a printed body 1.

Next, a hole was punched in the printed body 1 to form a straw insertion hole, and the side of the printed body facing the paperboard was laminated to the side of the laminated body 1 facing the aluminum foil by means of sandwich lamination with the aid of low-density polyethylene, resulting in a laminated body 2 wherein a printed layer, a low-density polyethylene layer, a paper layer, a low-density polyethylene layer, an aluminum foil layer, a biaxially oriented multilayer polyolefin film, and a low-density polyethylene film were laminated in sequence. Furthermore, low-density polyethylene was laminated by means of extrusion lamination onto the printed layer of the laminated body 2, resulting in a liquid-storing paper container material wherein a low-density polyethylene layer (thickness: 15 $\mu$m), a printed layer, a low-density polyethylene layer (thickness: 15 $\mu$m), a paper layer (paperboard having a basis weight of 200 g/m$^2$), a low-density polyethylene layer (thickness: 30 $\mu$m), an aluminum foil layer (thickness: 7 $\mu$m), a biaxially oriented multilayer polyolefin film (thickness: 20 $\mu$m), and a low-density polyethylene film (thickness: 20 $\mu$m) were laminated in sequence from the outermost layer side.

Aside from the biaxially oriented multilayer polyolefin film described above, the following materials were used at this time.

MIRASON 16P made by Mitsui Chemicals was used for the low-density polyethylene in each case, AJ-5 made by TAMAPOLY Co., Ltd. was used for the low-density polyethylene films, paperboard having a basis weight of 200 g/m$^2$ made from a virgin pulp of coniferous trees and broadleaf trees was used for the paperboard, and a JIS-standard reference product 1N30 was used for the aluminum foil.

The resulting liquid-storing paper container material was slit into belt shapes of specific widths and used in aseptic packaging on a UP-FUJI-MA80 machine made by Shikoku Kakoki Co., Ltd, resulting in a brick-shaped liquid-storing paper container 250 mL in volume filled with activated carbon filtered water for an organoleptic evaluation. The resulting brick-shaped liquid-storing paper container was measured for buckling strength and evaluated for ease of straw insertion as well as resin smell, and the results are shown in Table 1.

<Comparative Example 2>

A low-density polyethylene film (LDPE, melting point: 106˚C, MFR: 7.5 g/10 min, TREF temperature: 72.5˚C, density: 0.917 g/cm$^3$) having a thickness of 40 $\mu$m was subjected to corona treatment on one side to achieve a wetness index of 38 mN/m. 7 $\mu$m of aluminum foil was laminated on the corona-treated side by means of dry lamination at a drying temperature of 75˚C with the aid of a two-part curing ester-based adhesive, resulting in a laminated body 1 having a thickness of 49 $\mu$m and a double-layer configuration in which the low-density polyethylene film and the aluminum foil were laminated in sequence. The laminated body 1 was allowed to stand for three days, and the adhesive strength of the laminate between the aluminum foil and the low-density polyethylene film was measured. The adhesive strength of the laminate between the aluminum foil and the low-density polyethylene film at this time was 2.54 N/15 mm.

Low-density polyethylene was melt-extruded and laminated on paperboard having a basis weight of 200 g/m$^2$ to form a low-density polyethylene layer having a thickness of 15 $\mu$m, and printing was performed on the low-density polyethylene layer to obtain a printed body 1.

Next, a hole was punched in the printed body 1 to form a straw insertion hole, and the side of the printed body 1 facing the paperboard was laminated to the side of the laminated body 1 facing the aluminum foil by means of sandwich lamination with the aid of low-density polyethylene, resulting in a laminated body 2 wherein a printed layer, a low-density polyethylene layer, a paper layer, a low-density polyethylene layer, an aluminum foil layer, and a low-density polyethylene film were laminated in sequence.

Furthermore, low-density polyethylene was laminated by means of extrusion lamination onto the printed layer of the laminated body 2, resulting in a liquid-storing paper container material wherein a low-density polyethylene layer (thickness: 15 $\mu$m), a printed layer, a low-density polyethylene layer (thickness: 15 $\mu$m), a paper layer (paperboard having a basis weight of 200 g/m$^2$), a low-density polyethylene layer (thickness: 30 $\mu$m), an aluminum foil layer (thickness: 7 $\mu$m), and a low-density polyethylene film (thickness: 40 $\mu$m) were laminated in sequence from the outermost layer side.

The following materials were used at this time.

MIRASON 16P made by Mitsui Chemicals was used for the low-density polyethylene in each case, AJ-5 made by TAMAPOLY Co., Ltd. was used for the low-density polyethylene films, paperboard having a basis weight of 200 g/m$^2$ made from a virgin pulp of coniferous trees and broadleaf trees was used for the paperboard, and a JIS-standard reference product 1N30 was used for the aluminum foil.

The resulting liquid-storing paper container material was slit into belt shapes of specific widths and used in aseptic packaging on a UP-FUJI-MA80 machine made by Shikoku Kakoki Co., Ltd, resulting in a brick-shaped liquid-storing paper container 250 mL in volume filled with activated carbon filtered water for an organoleptic evaluation. The resulting brick-shaped liquid-storing paper container was measured for buckling strength and evaluated for ease of straw insertion as well as resin smell, and the results are shown in Table 1.

<Example 2>

The liquid-storing paper container material of the present invention was created in the following manner.

A triple-layer unstretched polyolefin film was formed as the sealant A layer. The film was composed of the following layers obtained by triple-layer co-extrusion: a) a layer 6 um thick composed of a resin obtained by mixing 50 wt% of a propylene-ethylene random copolymer (3.6 wt% of monomer units based on ethylene, melting point 146˚C, MFR: 7.0 g/10 min) with 50 wt% of an ethylene-1-butene copolymer (17 wt% of monomer units based on 1-butene, melting point: 63˚C, MFR: 4.9 g/10 min); b) a layer 20 $\mu$m thick composed of a resin obtained by mixing 70 wt% of a propylene-ethylene random copolymer (3.6 wt% of monomer units based on ethylene, melting point 146˚C, MFR: 7.0 g/10 min) with 30 wt% of an ethylene-1-butene copolymer (17 wt% of monomer units based on 1-butene, melting point: 63˚C, MFR: 4.9 g/10 min); and c) a layer 4 $\mu$m thick composed of an ethylene-1-butene copolymer (17 wt% of monomer units based on 1-butene, melting point 63˚C, MFR: 4.9 g/10 min, TREF temperature: 36.1˚C, density: 0.885 g/cm$^3$, EEE chain fraction: 0.67). These three layers were laminated in the sequence a/b/c for a total thickness of 30 $\mu$m.

Low-density polyethylene was melt-extruded and laminated on paperboard having a basis weight of 200 g/m$^2$ to form a low-density polyethylene layer having a thickness of 15 $\mu$m, and printing was performed on the low-density polyethylene layer to obtain a printed body 1. Next, a hole was punched in the printed body 1 to form a straw insertion hole, and aluminum foil having a thickness of 7 $\mu$m was laminated by means of sandwich lamination onto the side of the printed body 1 facing the paperboard while the low-density polyethylene was melt-extruded,- resulting in a laminated body 2 wherein a printed layer, a low-density polyethylene layer, a paper layer, a low-density polyethylene layer, and an aluminum foil layer were laminated in sequence. Furthermore, low-density polyethylene was laminated by means of melt-extrusion lamination as a sealant B layer onto the printed layer of the laminated body 2. Then, while the low-density polyethylene was melt-extruded, the triple-layer unstretched polyolefin film previously described was laminated by means of sandwich lamination as a sealant A layer onto the aluminum foil layer of the laminated body 2 on which the sealant B layer was laminated, so that the a layer side faced the aluminum foil side. The result was a liquid-storing paper container material wherein a low-density polyethylene layer (thickness: 15 $\mu$m), a printed layer, a low-density polyethylene layer (thickness: 15 $\mu$m), a paper layer (paperboard having a basis weight of 200 g/m$^2$), a low-density polyethylene layer (thickness: 30 $\mu$m), an aluminum foil layer (thickness: 7 $\mu$m), a low-density polyethylene layer (thickness: 15 $\mu$m), and a triple-layer unstretched polyolefin film (thickness: 30 $\mu$m) were laminated in sequence from the outermost layer side.

Aside from the triple-layer unstretched polyolefin film, the following materials were used at this time.

MIRASON 16P made by Mitsui Chemicals was used for the low-density polyethylene in each case, paperboard having a basis weight of 200 g/m$^2$ made from a virgin pulp of coniferous trees and broadleaf trees was used for the paperboard, and a JIS-standard reference product 1N30 was used for the aluminum foil.

The resulting liquid-storing paper container material was slit into belt shapes of specific widths and used in aseptic packaging on a UP-FUJI-MA80 machine made by Shikoku Kakoki Co., Ltd, resulting in a brick-shaped liquid-storing paper container 250 mL in volume filled with activated carbon filtered water for an organoleptic evaluation.

The resulting brick-shaped liquid-storing paper container was measured for buckling strength and evaluated for ease of straw insertion as well as resin smell, and the results are shown in Table 2.

<Example 3>

The liquid-storing paper container material of the present invention was created in the following manner.

A triple-layer unstretched polyolefin film was formed as the sealant A layer. The film was composed of the following layers obtained by triple-layer co-extrusion: a) a layer 6 μm thick composed of a resin obtained by mixing 40 wt% of a propylene-ethylene random copolymer (3.6 wt% of monomer units based on ethylene, melting point 146˚C, MFR: 7.0 g/10 min) with 60 wt% of an ethylene-1-hexene copolymer (11 wt% of monomer units based on 1-hexene, melting point: 100˚C, MFR: 8.0 g/10 min); b) a layer 21 μm thick composed of a resin obtained by mixing 70 wt% of a propylene-ethylene random copolymer (3.6 wt% of monomer units based on ethylene, melting point 146˚C, MFR: 7.0 g/10 min) with 30 wt% of an ethylene-1-butene copolymer (16 wt% of monomer units based on 1-butene, melting point: 66˚C, MFR: 4.0.g/10 min); and c) a layer 3 μm thick composed of an ethylene-1-butene copolymer (16 wt% of monomer units based on 1-butene, melting point 66˚C, MFR: 4.0 g/10 min, TREF temperature: 39.2˚C, density: 0.885 g/cm$^3$, EEE chain fraction: 0.67). These three layers were laminated in the sequence a/b/c for a total thickness of 30 μm.

Aside from using the triple-layer unstretched polyolefin film formed as the sealant A layer, a liquid-storing paper container material was obtained in the same manner as Example 2. In this material, a low-density polyethylene layer (thickness: 15 μm), a printed layer, a low-density polyethylene layer (thickness: 15 μm), a paper layer (paperboard having a basis weight of 200 g/m$^2$), a low-density polyethylene layer (thickness: 30 μm), an aluminum foil layer (thickness: 7 μm), a low-density polyethylene layer (thickness: 15 μm), and a triple-layer unstretched polyolefin film (thickness: 30 μm) were laminated in sequence from the outermost layer side.

Aside from the triple-layer unstretched polyolefin film, the following materials were used at this time.

MIRASON 16P made by Mitsui Chemicals was used for the low-density polyethylene in each case, paperboard having a basis weight of 200 g/m$^2$ made from a virgin pulp of coniferous trees and broadleaf trees was used for the paperboard, and a JIS-standard reference product 1N30 was used for the aluminum foil.

The resulting liquid-storing paper container material was slit into belt shapes of specific widths and used in aseptic packaging on a UP-FUJI-MA80 machine made by Shikoku Kakoki Co., Ltd, resulting in a brick-shaped liquid-storing paper container 250 mL in volume filled with activated carbon filtered water for an organoleptic evaluation.

The resulting brick-shaped liquid-storing paper container was measured for buckling strength and evaluated for ease of straw insertion as well as resin smell, and the results are shown in Table 1.

<Example 4>

The liquid-storing paper container material of the present invention was created in the following manner.

A triple-layer unstretched polyolefin film was formed as the sealant A layer. The film was composed of the following layers obtained by triple-layer co-extrusion: a) a layer 6 μm thick composed of a resin obtained by mixing 60 wt% of a propylene-ethylene-1-butene terpolymer (2.3 wt% of monomer units based on ethylene and 1.3 wt% of monomer units based on 1-butene, melting point 137˚C, MFR: 7.0 g/10 min) with 40 wt% of an ethylene-1-butene copolymer (13 wt% of monomer units based on 1-butene, melting point: 83˚C, MFR: 6.8 g/10 min); b) a layer 20 μm thick composed of a resin obtained by mixing 70 wt% of a propylene-ethylene random copolymer (3.6 wt% of monomer units based on ethylene, melting point 146˚C, MFR: 7.0 g/10 min) with 30 wt% of an ethylene-1-butene copolymer (13 wt% of monomer units based on 1-butene, melting point: 83˚C, MFR: 6.8 g/10 min); and c) a layer 4 μm thick composed of an ethylene-1-butene copolymer (13 wt% of monomer units based on 1-butene, melting point 83˚C, MFR: 6.8 g/10 min, TREF temperature: 53˚C, density: 0.890 g/cm$^3$, EEE chain fraction: 0.77). These three layers were laminated in the sequence a/b/c for a total thickness of 30 μm.

Aside from using the triple-layer unstretched polyolefin film formed as the sealant A layer, a liquid-storing paper container material was obtained in the same manner as Example 2. In this material, a low-density polyethylene layer (thickness: 15 μm), a printed layer, a low-density polyethylene layer (thickness: 15 μm), a paper layer (paperboard having a basis weight of 200 g/m$^2$), a low-density polyethylene layer (thickness: 30 μm), an aluminum foil layer (thickness: 7 μm), a low-density polyethylene layer (thickness: 15 μm), and a triple-layer unstretched polyolefin film (thickness: 30

μm) were laminated in sequence from the outermost layer side.

Aside from the triple-layer unstretched polyolefin film, the following materials were used at this time.

MIRASON 16P made by Mitsui Chemicals was used for the low-density polyethylene in each case, paperboard having a basis weight of 200 g/m$^2$ made from a virgin pulp of coniferous trees and broadleaf trees was used for the paperboard, and a JIS-standard reference product 1N30 was used for the aluminum foil.

The resulting liquid-storing paper container material was slit into belt shapes of specific widths and used in aseptic packaging on a UP-FUJI-MA80 machine made by Shikoku Kakoki Co., Ltd, resulting in a brick-shaped liquid-storing paper container 250 mL in volume filled with activated carbon filtered water for an organoleptic evaluation.

The resulting brick-shaped liquid-storing paper container was measured for buckling strength and evaluated for ease of straw insertion as well as resin smell, and the results are shown in Table 1.

<Comparative Example 3>

The liquid-storing paper container material was created in the following manner.

An ethylene-1-hexene copolymer (linear low-density polyethylene (hereinafter referred to as LLDPE); 11 wt% of monomer units based on 1-hexene, melting point: 100˚C, MFR: 8.0 g/10 min, TREF temperature: 73.3˚C, density: 0.912 g/cm$^3$, EEE chain fraction: 0.92; the EEE chain fraction of the ethylene-1-hexene copolymer was calculated according to the methods of J.C. Randall et. al. (Eric T. Hsieh and James C. Randall, Macromolecules 1982, 15.1402)) was extruded as the sealant A layer from a T die to form a single-layer unstretched LLDPE film having a thickness of 40 μm.

Aside from using the single-layer unstretched LLDPE film formed as the sealant A layer, a liquid-storing paper container material was obtained in the same manner as Example 2. In this material, a low-density polyethylene layer (thickness: 15 μm), a printed layer, a low-density polyethylene layer (thickness: 15 μm), a paper layer (paperboard having a basis weight of 200 g/m$^2$), a low-density polyethylene layer (thickness: 30 μm), an aluminum foil layer (thickness: 7 μm), a low-density polyethylene layer (thickness: 15 μm), and a single-layer unstretched LLDPE film (thickness: 40 μm) were laminated in sequence from the outermost layer side.

Aside from the single-layer unstretched LLDPE film, the following materials were used at this time.

MIRASON 16P made by Mitsui Chemicals was used for the low-density polyethylene in each case, paperboard having a basis weight of 200 g/m$^2$ made from a virgin pulp of coniferous trees and broadleaf trees was used for the paperboard, and a JIS-standard reference product 1N30 was used for the aluminum foil.

The resulting liquid-storing paper container material was slit into belt shapes of specific widths and used in aseptic packaging on a UP-FUJI-MA80 machine made by Shikoku Kakoki Co., Ltd, resulting in a brick-shaped liquid-storing paper container 250 mL in volume filled with activated carbon filtered water for an organoleptic evaluation.

The resulting brick-shaped liquid-storing paper container was measured for buckling strength and evaluated for ease of straw insertion as well as resin smell, and the results are shown in Table 1.

[Table 1]

| | Buckling strength | Ease of straw insertion | Resin smell evaluation | |
| --- | --- | --- | --- | --- |
| | (Units: N) | 3 level evaluation | 5 level evaluation | |
| | | | After 5 days | After 10 days |
| Example 1 | 184 | 0 | 1 | 2 |
| Comparative Example 1 | 181 | 0 | 4 | 4 |
| Comparative Example 2 | 163 | 0 | 5 | 5 |
| Example 2 | 178 | 0 | 1 | 2 |
| Example 3 | 181 | 0 | 1 | 2 |
| Example 4 | 182 | 0 | 1 | 2 |
| Comparative Example 3 | 172 | 0 | 3 | 4 |

Industrial Applicability

When used as the sealant layer on the innermost surfaces of a liquid-storing paper container, the multilayer polyolefin film of the present invention is highly applicable as the constituent material of a multilayer paper container because neither the smell or taste of the resin, nor any abnormal smells or tastes, are observed in the contents, and there is very little adsorption of the taste components of the contents.

**Claims**

1. A liquid-storing paper container material obtained by laminating at least a sealant B layer composed of a thermoplastic synthetic resin as one outermost layer, a paper layer, and a sealant A layer composed of a multilayer polyolefin film as another outermost layer; wherein
   the sealant A layer is composed at least of one surface layer (*a* layer), another surface layer (*c* layer), and a middle layer (*b* layer), all described below; and
   the a layer is laminated on the inner side while the *c* layer is laminated on the outer side.

   a layer: a layer composed of one or a mixture of the following: a propylene homopolymer, a propylene-based copolymer, and a ethylene-$\alpha$-olefin copolymer
   b layer: a layer composed of a propylene-based copolymer and an ethylene-$\alpha$-olefin copolymer
   c layer: a layer composed of an ethylene-$\alpha$-olefin copolymer, having a melting point of 60 to 140˚C and a thickness of 1 to 20 $\mu$m

2. The liquid-storing paper container material according to claim 1, wherein the *a* layer is a layer composed of a propylene-based copolymer alone, or a mixture of a propylene-based copolymer and an ethylene-$\alpha$-olefin copolymer.

3. The liquid-storing paper container material according to claim 1 or 2, wherein the propylene-based copolymer constituting the *a* layer is a propylene-ethylene-1-butene terpolymer or a propylene-ethylene random copolymer.

4. The liquid-storing paper container material according to claim 1 or 2, wherein the ethylene-$\alpha$-olefin copolymer constituting the *a* layer is an ethylene-1-butene copolymer or an ethylene-1-hexene copolymer.

5. The liquid-storing paper container material according to any of claims 1 through 4, wherein the propylene-based copolymer constituting the *b* layer is a propylene-ethylene random copolymer.

6. The liquid-storing paper container material according to any of claims 1 through 5, wherein the ethylene-$\alpha$-olefin copolymer constituting the *b* layer is an ethylene-1-butene copolymer.

7. The liquid-storing paper container material according to any of claims 1 through 5, wherein the ethylene-$\alpha$-olefin copolymer constituting the *c* layer is an ethylene-1-butene copolymer.

8. A liquid-storing paper container, wherein the liquid-storing paper container material according to claim 1 is formed so that the sealant A layer constitutes the innermost surfaces.

FIG 1

FIG 2

# FIG 3

# FIG 4

FIG 5

FIG 6

| INTERNATIONAL SEARCH REPORT | International application No. |
|---|---|
| | PCT/JP2006/303095 |

**A. CLASSIFICATION OF SUBJECT MATTER**
*B32B27/32*(2006.01), *B65D65/40*(2006.01), *B65D77/28*(2006.01)

According to International Patent Classification (IPC) or to both national classification and IPC

**B. FIELDS SEARCHED**

Minimum documentation searched (classification system followed by classification symbols)
*B32B1/00-43/00*(2006.01), *B65D65/40*(2006.01), *B65D77/28*(2006.01)

Documentation searched other than minimum documentation to the extent that such documents are included in the fields searched
Jitsuyo Shinan Koho         1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2002-200716 A  (Tokuyama Corp., San Tokkusu Kabushiki Kaisha),<br>16 July, 2002 (16.07.02),<br>Claims; Par. Nos. [0009], [0016], [0044]; examples<br>(Family: none) | 1-7<br>8,9 |
| A | JP 2004-051099 A  (Dainippon Printing Co., Ltd.),<br>19 February, 2004 (19.02.04),<br>Claims<br>(Family: none) | 1-9 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 June, 2006 (07.06.06) | 20 June, 2006 (20.06.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/303095 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2003-251766 A  (Tokuyama Corp., San Tokkusu Kabushiki Kaisha),<br>09 September, 2003 (09.09.03),<br>Claims<br>(Family: none) | 1-9 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001199433 A

- JP 11216821 A

**Non-patent literature cited in the description**

- **Z. MENCIK.** *Journal of Macromolecular Science, Physics,* 1972, vol. B6, 101
- **ERIC T. HSIEH ; JAMES C. RANDALL.** *Macromolecules,* 1982, vol. 15, 365

- **ERIC T. HSIEH ; JAMES C. RANDALL.** *Macromolecules,* 1982, vol. 15, 1402